(19) 

**Europäisches Patentamt**
**European Patent Office**
**Office européen des brevets**

(11) **EP 4 506 377 A1**

(12) **EUROPEAN PATENT APPLICATION**
published in accordance with Art. 153(4) EPC

(43) Date of publication:
**12.02.2025 Bulletin 2025/07**

(21) Application number: **23780955.3**

(22) Date of filing: **30.03.2023**

(51) International Patent Classification (IPC):
***C08F 214/26*** (2006.01)　　***C08J 5/00*** (2006.01)

(52) Cooperative Patent Classification (CPC):
**B29C 45/02; B29C 48/00; C08F 214/26; C08J 5/00; C08J 5/18**

(86) International application number:
**PCT/JP2023/013333**

(87) International publication number:
**WO 2023/190947 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **30.03.2022  JP 2022055224**
　　　　　　　**26.08.2022  JP 2022135161**

(71) Applicant: **DAIKIN INDUSTRIES, LTD.**
**Osaka-shi, Osaka 530-0001 (JP)**

(72) Inventors:
• **ISAKA, Tadaharu**
  **Osaka-Shi, Osaka 530-0001 (JP)**
• **ZENKE, Yumi**
  **Osaka-Shi, Osaka 530-0001 (JP)**
• **YAMAMOTO, Yukari**
  **Osaka-Shi, Osaka 530-0001 (JP)**
• **TSUDA, Hayato**
  **Osaka-Shi, Osaka 530-0001 (JP)**
• **HAMADA, Hiroyuki**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **COPOLYMER, MOLDED BODY, EXTRUDED BODY, AND TRANSFER MOLDED BODY**

(57)　Provided is a copolymer comprising tetrafluoroethylene unit and perfluoro(ethyl vinyl ether) unit, wherein the copolymer has a content of perfluoro(ethyl vinyl ether) unit of 4.5 to 6.2% by mass with respect to the whole of the monomer units, a melt flow rate at 372°C of 0.8 to 4.0 g/10 min, and the number of functional groups of 20 or less per $10^6$ main-chain carbon atoms.

EP 4 506 377 A1

## Description

TECHNICAL FIELD

The present disclosure relates to a copolymer, a formed article, an extrusion formed article, and a transfer molded article.

BACKGROUND ART

Patent Document 1 discloses a tube comprising a tetrafluoroethylene/fluoroalkyl vinyl ether copolymer, wherein the tube inner surface has a surface roughness Ra of 5 nm or less measured by atomic force microscopy (AFM) with an evaluation length set to 3 $\mu$m, and the tube has an amount of metals eluted from the tube inner surface of 0.30 ng/cm$^2$ or less.

RELATED ART

PATENT DOCUMENTS

Patent Document 1: International Publication No. WO 2021/033539

SUMMARY OF THE INVENTION

PROBLEM TO BE SOLVED BY THE INVENTION

An object of the present disclosure is to provide a copolymer capable of providing a formed article having excellent mold shape conformability, water vapor permeability, low oxygen permeability, creep resistance, and durability against tensile force applied at 120°C.

MEANS FOR SOLVING THE PROBLEM

The present disclosure provides a copolymer comprising tetrafluoroethylene unit and perfluoro(ethyl vinyl ether) unit, wherein the copolymer has a content of perfluoro(ethyl vinyl ether) unit of 4.5 to 6.2% by mass with respect to the whole of the monomer units, a melt flow rate at 372°C of 0.8 to 4.0 g/10 min, and the number of functional groups of 20 or less per 10$^6$ main-chain carbon atoms.

EFFECTS OF INVENTION

The present disclosure can provide a copolymer capable of providing a formed article having excellent mold shape conformability, water vapor permeability, low oxygen permeability, creep resistance, and durability against tensile force applied at 120°C.

DESCRIPTION OF EMBODIMENTS

Hereinafter, specific embodiments of the present disclosure will now be described in detail, but the present disclosure is not limited to the following embodiments.
The copolymer of the present disclosure contains tetrafluoroethylene (TFE) unit and perfluoro(ethyl vinyl ether) (PEVE) unit.
In heat press molding, a resin sheet for processing is heated to become soft, and pressure is applied to the sheet from both sides using a mold to obtain a formed article having the desired shape. Accordingly, the sheet for processing used in heat press molding is required to have a property that allows the sheet to be readily deformed when the sheet is soft and that enables the sheet to conform to the shape of the mold. At the same time, the obtained formed article is required to be resistant to being easily deformed by compression.
It has been found that by suitably regulating the content of PEVE unit, the melt flow rate (MFR), and the number of functional groups of a copolymer containing TFE unit and PEVE unit, a formed article can be obtained that has excellent mold shape conformability because the copolymer has a high rate of deflection under load at high temperatures and that even has excellent creep resistance. Moreover, the formed article obtained from such a copolymer has excellent water vapor permeability and low oxygen permeability, and, therefore, can be suitably used as a protective film.
The copolymer of the present disclosure is a melt-fabricable fluororesin. The being melt-fabricable means that it is possible to melt and process a polymer by using a conventional processing device such as an extruder or an injection molding machine.

The content of PEVE unit of the copolymer is 4.5 to 6.2% by mass with respect to the whole of the monomer units. The content of PEVE unit of the copolymer is preferably 4.6% by mass or more, more preferably 4.7% by mass or more, even more preferably 4.8% by mass or more, yet more preferably 4.9% by mass or more, further preferably 5.0% by mass or more, particularly preferably 5.3% by mass or more, and most preferably 5.5% by mass or more, and is preferably 6.1% by mass or less, more preferably 6.0% by mass or less, even more preferably 5.7% by mass or less, and particularly preferably 5.5% by mass or less. An excessively high content of PEVE unit of the copolymer results in poor low oxygen permeability and creep resistance. An excessively low content of PEVE unit of the copolymer results in poor mold shape conformability, water vapor permeability, and durability against tensile force applied at 120°C.

The content of TFE unit of the copolymer, with respect to the whole of the monomer units, is preferably 93.8% by mass or more, more preferably 93.9% by mass or more, even more preferably 94.0% by mass or more, particularly preferably 94.3% by mass or more, and most preferably 94.5% by mass or more, and is preferably 95.5% by mass or less, more preferably 95.4% by mass or less, even more preferably 95.3% by mass or less, yet more preferably 95.2% by mass or less, further preferably 95.1% by mass or less, particularly preferably 95.0% by mass or less, further more preferably 94.7% by mass or less, and most preferably 94.5% by mass or less. An excessively low content of TFE unit of the copolymer may result in poor low oxygen permeability and creep resistance. An excessively high content of TFE unit of the copolymer may result in poor mold shape conformability, water vapor permeability, and durability against tensile force applied at 120°C.

In the present disclosure, the content of each monomer unit in the copolymer is measured by a $^{19}$F-NMR method.

The copolymer can also contain a monomer unit originated from a monomer that is copolymerizable with TFE and PEVE. In this case, the content of the monomer unit copolymerizable with TFE and PEVE is, with respect to the whole of the monomer units of the copolymer, preferably 0 to 1.7% by mass, more preferably 0.05 to 1.4% by mass, even more preferably 0.1 to 0.5% by mass, and particularly preferably 0.1 to 0.3% by mass. The content of the monomer unit copolymerizable with TFE and PEVE may be 0.1% by mass or less with respect to the whole of the monomer units.

The monomers copolymerizable with TFE and PEVE may include hexafluoropropylene (HFP), vinyl monomers represented by $CZ^1Z^2=CZ^3(CF_2)_nZ^4$ wherein $Z^1$, $Z^2$ and $Z^3$ are identical or different, and represent H or F; $Z^4$ represents H, F or Cl; and n represents an integer of 2 to 10, perfluoro(alkyl vinyl ether) [PAVE] represented by $CF_2=CF-ORf^1$ wherein $Rf^1$ is a perfluoroalkyl group having 1 to 8 carbon atoms (excluding PEVE), and alkyl perfluorovinyl ether derivatives represented by $CF_2=CF-OCH_2-Rf^1$ wherein $Rf^1$ represents a perfluoroalkyl group having 1 to 5 carbon atoms. Among these, HFP is preferred.

The copolymer is preferably at least one selected from the group consisting of a copolymer consisting only of the TFE unit and the PEVE unit, and a TFE/HFP/PEVE copolymer, and is more preferably a copolymer consisting only of a TFE unit and a PEVE unit.

The copolymer has a melt flow rate (MFR) of 0.8 to 4.0 g/10 min. The MFR of the copolymer is preferably 0.9 g/10 min or more, more preferably 1.0 g/10 min or more, even more preferably 1.5 g/10 min or more, particularly preferably 1.8 g/10 min or more, and most preferably 2.0 g/10 min or more, and is preferably 3.8 g/10 min or less, more preferably 3.5 g/10 min or less, even more preferably 3.3 g/10 min or less, yet more preferably 3.0 g/10 min or less, further preferably 2.5 g/10 min or less, particularly preferably 2.2 g/10 min or less, and most preferably 2.0 g/10 min or less. An excessively high MFR of the copolymer results in poor mold shape conformability, water vapor permeability, and durability against tensile force applied at 120°C. An excessively low MFR of the copolymer results in poor low oxygen permeability.

In the present disclosure, the MFR is a value obtained as a mass (g/10 min) of the polymer flowing out from a nozzle of 2.1 mm in inner diameter and 8 mm in length per 10 min at 372°C under a load of 5 kg using a melt indexer, according to ASTM D1238.

The MFR can be regulated by regulating the kind and amount of a polymerization initiator to be used in polymerization of monomers, the kind and amount of a chain transfer agent, and the like.

The number of functional groups per $10^6$ main-chain carbon atoms of the copolymer is 20 or less. The number of functional groups per $10^6$ main-chain carbon atoms of the copolymer is preferably 15 or less, more preferably 10 or less, and even more preferably less than 6. When the number of functional groups is excessively large, a formed article having excellent low oxygen permeability and creep resistance cannot be obtained.

For identification of the kind of functional groups and measurement of the number of the functional groups, infrared spectroscopy can be used.

The number of the functional groups is measured, specifically, by the following method. First, the copolymer is formed by cold press to prepare a film of 0.25 to 0.30 mm in thickness. The film is analyzed by Fourier transform infrared spectroscopy to obtain an infrared absorption spectrum, and a difference spectrum against a base spectrum that is completely fluorinated and has no functional groups is obtained. From an absorption peak of a specific functional group observed on this difference spectrum, the number N of functional groups per $1\times10^6$ carbon atoms in the copolymer is calculated according to the following formula (A).

$$N = I \times K/t \cdots (A)$$

I: absorbance
K: correction factor
t: thickness of film (mm)

For reference, for some functional groups, the absorption frequency, the molar absorption coefficient and the correction factor are shown in Table 1. Then, the molar absorption coefficients are those determined from FT-IR measurement data of low molecular model compounds.

[Table 1]

Table 1

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

Absorption frequencies of -CH$_2$CF$_2$H, -CH$_2$COF, -CH$_2$COOH, - CH$_2$COOCH$_3$ and -CH$_2$CONH$_2$ are lower by a few tens of kaysers (cm$^{-1}$) than those of -CF$_2$H, -COF, -COOH free and -COOH bonded, - COOCH$_3$ and -CONH$_2$ shown in the Table, respectively.

For example, the number of functional groups -COF is the total of the number of a functional group determined from an absorption peak having an absorption frequency of 1,883 cm$^{-1}$ derived from -CF$_2$COF and the number of a functional group determined from an absorption peak having an absorption frequency of 1,840 cm$^{-1}$ derived from -CH$_2$COF.

The functional groups are ones present on main chain terminals or side chain terminals of the copolymer, and ones present in the main chain or the side chains. The number of functional groups may be the total number of -CF=CF$_2$, -CF$_2$H, - COF, -COOH, -COOCH$_3$, -CONH$_2$ and -CH$_2$OH.

The functional groups are introduced to the copolymer by, for example, a chain transfer agent or a polymerization initiator used for production of the copolymer. For example, in the case of using an alcohol as the chain transfer agent, or a peroxide having a structure of -CH$_2$OH as a polymerization initiator, -CH$_2$OH is introduced on the main chain terminals of the copolymer. Alternatively, the functional group is introduced on the side chain terminal of the copolymer by polymerizing a monomer having the functional group.

The copolymer satisfying the above range regarding the number of functional groups can be obtained by subjecting the copolymer to a fluorination treatment. That is, the copolymer of the present disclosure is preferably one which is subjected to the fluorination treatment. Further, the copolymer of the present disclosure preferably has -CF$_3$ terminal groups.

The melting point of the copolymer is preferably 290 to 305°C, more preferably 292°C or higher, and even more preferably 293°C or higher, and is more preferably 302°C or lower and even more preferably 300°C or lower. Due to the melting point being within the above range, the copolymer can be obtained that is capable of providing a formed article having, in particular, even better mold shape conformability, water vapor permeability, low oxygen permeability, creep resistance, and durability against tensile force applied at 120°C.

In the present disclosure, the melting point can be measured with a differential scanning calorimeter [DSC].

The water vapor permeability of the copolymer is preferably 30.0 g·cm/m$^2$ or more. The content of PEVE unit, the melt flow rate (MFR), and the number of functional groups of the copolymer containing TFE unit and PEVE unit are suitably regulated and, therefore, the copolymer of the present disclosure has excellent water vapor permeability. Accordingly, the copolymer of the present disclosure can be used to make a container that allows water vapor to appropriately permeate, and, therefore, the copolymer of the present disclosure can be suitably used as a material of a microorganism incubator that needs to maintain an appropriate level of humidity.

In the present disclosure, the water vapor permeability can be measured under conditions having a temperature of 95°C and for 45 days. Specific measurement of water vapor permeability can be carried out by the method described in the Examples.

The oxygen permeability coefficient of the copolymer is preferably 1,220 $cm^3 \cdot mm/(m^2 \cdot 24\ h \cdot atm)$ or less. The content of PEVE unit, the melt flow rate (MFR), and the number of functional groups of the copolymer containing TFE unit and PEVE unit are suitably regulated, and, therefore, the copolymer of the present disclosure has excellent low oxygen permeability.

In the present disclosure, the oxygen permeability coefficient can be measured under conditions having a test temperature of 70°C and a test humidity of 0% RH. Specific measurement of oxygen permeability coefficient can be carried out by the method described in the Examples.

The copolymer of the present disclosure can be produced by a polymerization method such as suspension polymerization, solution polymerization, emulsion polymerization, or bulk polymerization. The polymerization method is preferably emulsion polymerization or suspension polymerization. In these polymerization methods, conditions such as temperature and pressure, and a polymerization initiator and other additives can be suitably set depending on the composition and the amount of the copolymer.

As the polymerization initiator, an oil-soluble radical polymerization initiator, or a water-soluble radical polymerization initiator may be used.

The oil-soluble radical polymerization initiator may be a known oil-soluble peroxide, and examples thereof typically include:

dialkyl peroxycarbonates such as di-n-propyl peroxydicarbonate, diisopropyl peroxydicarbonate, di-sec-butyl peroxydicarbonate, and di-2-ethoxyethyl peroxydicarbonate;
peroxyesters such as t-butyl peroxyisobutyrate and t-butyl peroxypivalate;
dialkyl peroxides such as di-t-butyl peroxide; and
di[fluoro(or fluorochloro)acyl] peroxides.

The di[fluoro(or fluorochloro)acyl] peroxides include diacyl peroxides represented by $[(RfCOO)-]_2$ wherein Rf is a perfluoroalkyl group, an ω-hydroperfluoroalkyl group, or a fluorochloroalkyl group.

Examples of the di[fluoro(or fluorochloro)acyl] peroxides include di(ω-hydro-dodecafluoroheptanoyl) peroxide, di(ω-hydro-tetradecafluorooctanoyl)peroxide, di(ω-hydro-hexadecafluorononanoyl) peroxide, di(perfluoropropionyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydrodo-decafluoroheptanoyl-ω-hydrohexadecafluorononanoyl peroxide, ω-chloro-hexafluorobutyryl-ω-chloro-decafluorohexanoyl peroxide, ω-hydro-dodecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, and di(undecachlorotriacontafluorodocosanoyl) peroxide.

The water-soluble radical polymerization initiator may be a known water-soluble peroxide, and examples thereof include ammonium salts, potassium salts and sodium salts of persulfuric acid, perboric acid, perchloric acid, perphosphoric acid, percarbonic acid and the like, organic peroxides such as disuccinoyl peroxide and diglutaroyl peroxide, and t-butyl permaleate and t-butyl hydroperoxide. A reductant such as a sulfite salt may be combined with a peroxide and used, and the amount thereof to be used may be 0.1 to 20 times with respect to the peroxide.

In the polymerization, a surfactant, a chain transfer agent and a solvent may be used, which are conventionally known.

The surfactant may be a known surfactant, and, for example, nonionic surfactants, anionic surfactants, and cationic surfactants may be used. Among these, fluorine-containing anionic surfactants are preferable, and more preferable are linear or branched fluorine-containing anionic surfactants having 4 to 20 carbon atoms, which may contain an ether bond oxygen (that is, an oxygen atom may be present between carbon atoms). The amount of the surfactant added (based on the polymerization water) is preferably 50 to 5,000 ppm.

Examples of the chain transfer agent include hydrocarbons such as ethane, isopentane, n-hexane, and cyclohexane; aromatics such as toluene and xylene; ketones such as acetone; acetate esters such as ethyl acetate and butyl acetate; alcohols such as methanol and ethanol; mercaptans such as methylmercaptan; and halogenated hydrocarbons such as carbon tetrachloride, chloroform, methylene chloride, and methyl chloride. The amount of the chain transfer agent to be added may vary depending on the chain transfer constant value of the compound to be used, but is usually in the range of 0.01 to 20% by mass with respect to the solvent in the polymerization.

The solvent may include water and mixed solvents of water and an alcohol.

In the suspension polymerization, in addition to water, a fluorosolvent may be used. The fluorosolvent may include hydrochlorofluoroalkanes such as $CH_3CClF_2$, $CH_3CCl_2F$, $CF_3CF_2CCl_2H$ and $CF_2ClCF_2CFHCl$; chlorofluoroalkanes such as $CF_2ClCFClCF_2CF_3$ and $CF_3CFClCFClCF_3$; hydrofluoroalkanes such as $CF_3CFHCFHCF_2CF_2CF_3$, $CF_2HCF_2CF_2CF_2CF_2H$, and $CF_3CF_2CF_2CF_2CF_2CF_2CF_2H$; hydrofluoroethers such as $CH_3OC_2F_5$, $CH_3OC_3F_5CF_3CF_2CH_2OCHF_2$, $CF_3CHFCF_2OCH_3$, $CHF_2CF_2OCH_2F$, $(CF_3)_2CHCF_2OCH_3$, $CF_3CF_2CH_2OCH_2CHF_2$, and $CF_3CHFCF_2OCH_2CF_3$; and perfluoroalkanes such as perfluorocyclobutane, $CF_3CF_2CF_2CF_3$, $CF_3CF_2CF_2CF_2CF_3$, and $CF_3CF_2CF_2CF_2CF_2CF_3$, and, among these, perfluoroalkanes are preferable. The amount of the fluorosolvent to be used is, from the viewpoint of suspendability and economic efficiency, preferably 10 to 100% by mass with respect to an aqueous medium.

The polymerization temperature is not limited, and may be 0 to 100°C. The polymerization pressure is suitably set depending on other polymerization conditions to be used such as the kind, the amount and the vapor pressure of the solvent, and the polymerization temperature, but may usually be 0 to 9.8 MPaG.

In the case of obtaining an aqueous dispersion containing the copolymer by the polymerization reaction, the copolymer can be recovered by coagulating, washing, and drying the copolymer contained in the aqueous dispersion. Then in the case of obtaining the copolymer as a slurry by the polymerization reaction, the copolymer can be recovered by taking out the slurry from a reaction container, and cleaning and drying the slurry. The copolymer can be recovered in a shape of powder by the drying.

The copolymer obtained by the polymerization may be formed into pellets. A method of forming into pellets is not limited, and a conventionally known method can be used. Examples thereof include methods of melt extruding the copolymer by using a single-screw extruder, a twin-screw extruder or a tandem extruder and cutting the resultant into a predetermined length to form the copolymer into pellets. The extrusion temperature in the melt extrusion needs to be varied depending on the melt viscosity and the production method of the copolymer, and is preferably from the melting point of the copolymer +20°C to the melting point of the copolymer +140°C. A method of cutting the copolymer is not limited, and there can be adopted a conventionally known method such as a strand cut method, a hot cut method, an underwater cut method, or a sheet cut method. Volatile components in the obtained pellets may be removed by heating the pellets (degassing treatment). Alternatively, the obtained pellets may be treated by bringing the pellets into contact with hot water at 30 to 200°C, steam at 100 to 200°C, or hot air at 40 to 200°C.

Alternatively, the copolymer obtained by the polymerization may be subjected to fluorination treatment. The fluorination treatment can be carried out by bringing the copolymer having been subjected to no fluorination treatment into contact with a fluorine-containing compound. By the fluorination treatment, thermally unstable functional groups of the copolymer, such as -COOH, $-COOCH_3$, $-CH_2OH$, -COF, $-CF=CF_2$, and $-CONH_2$ and thermally relatively stable functional groups thereof, such as $-CF_2H$ can be converted to thermally very stable $-CF_3$. Consequently, the total number (the number of functional groups) of -COOH, $-COOCH_3$, $-CH_2OH$, -COF, $-CF=CF_2$, $-CONH_2$, and $-CF_2H$ of the copolymer can be easily regulated to the above-mentioned range.

The fluorine-containing compound is not limited, but includes fluorine radical sources generating fluorine radicals under the fluorination treatment condition. The fluorine radical sources include $F_2$ gas, $CoF_3$, $AgF_2$, $UF_6$, $OF_2$, $N_2F_2$, $CF_3OF$, and halogen fluorides (for example, $IF_5$ and $ClF_3$).

The fluorine radical source such as $F_2$ gas may be, for example, one having a concentration of 100%, but from the viewpoint of safety, the fluorine radical source is preferably mixed with an inert gas and diluted therewith to 5 to 50% by mass, and then used; and it is more preferably to be diluted to 15 to 30% by mass. The inert gas includes nitrogen gas, helium gas and argon gas, but from the viewpoint of the economic efficiency, nitrogen gas is preferred.

The condition of the fluorination treatment is not limited, and the copolymer in a molten state may be brought into contact with the fluorine-containing compound, but the fluorination treatment can be carried out usually at a temperature of not higher than the melting point of the copolymer, preferably at 20 to 240°C, and more preferably at 100 to 220°C. The fluorination treatment is carried out usually for 1 to 30 hours and preferably 5 to 25 hours. The fluorination treatment is preferred which brings the copolymer having been subjected to no fluorination treatment into contact with fluorine gas ($F_2$ gas).

A composition may be obtained by mixing the copolymer of the present disclosure and as required, other components. The other components include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents, and dehydrofluorination agents.

Examples of the fillers include silica, kaolin, clay, organo clay, talc, mica, alumina, calcium carbonate, calcium terephthalate, titanium oxide, calcium phosphate, calcium fluoride, lithium fluoride, crosslinked polystyrene, potassium titanate, carbon, boron nitride, carbon nanotube, and glass fiber. The electrically conductive agents include carbon black. The plasticizers include dioctyl phthalate and pentaerythritol. The processing aids include carnauba wax, sulfone compounds, low molecular weight polyethylene, and fluorine-based auxiliary agents. The dehydrofluorination agents include organic oniums and amidines.

As the above-mentioned other components, other polymers other than the copolymer may be used. The other polymers include fluororesins other than the copolymer, fluoroelastomer, and non-fluorinated polymers.

A method of producing the composition includes a method of dry mixing the copolymer and the other components, and a method of previously mixing the copolymer and the other components by a mixer and then melt kneading the mixture by a kneader, melt extruder or the like.

The copolymer of the present disclosure or the above-mentioned composition can be used as a processing aid, a forming material and the like, but use as a forming material is suitable. There can also be utilized aqueous dispersions, solutions and suspensions of the copolymer of the present disclosure, and the copolymer/solvent-based materials; and these can be used for application of coating materials, encapsulation, impregnation, and casting of films. However, since the copolymer of the present disclosure has the above-mentioned properties, it is preferable to use the copolymer as the forming material.

A formed article may be obtained by forming the copolymer of the present disclosure or the above composition.

A method of forming the copolymer or the composition is not limited, and includes injection molding, extrusion forming, compression molding, blow molding, transfer molding, rotomolding, and rotolining molding. The forming method, in particular, is preferably extrusion forming, compression molding, and transfer molding; from the viewpoint of being able to produce formed articles in high productivity, more preferable are extrusion forming and transfer molding, and still more preferable is extrusion forming. That is, the formed article is preferably an extrusion formed article, a compression formed article, an injection molded article, or a transfer molded article; and from the viewpoint of being able to produce a formed article in high productivity, is more preferably an extrusion formed article or a transfer molded article, and is still more preferably an extrusion formed article. By forming the copolymer of the present disclosure by extrusion forming or transfer molding, a visually attractive formed article can be obtained.

The formed article containing the copolymer of the present disclosure may be, for example, a nut, a bolt, a joint, a film, a bottle, a gasket, an electric wire coating, a tube, a hose, a pipe, a valve, a sheet, a seal, a packing, a tank, a roller, a container, a cock, a connector, a filter housing, a filter cage, a flow meter, a pump, a wafer carrier, and a wafer box.

The copolymer of the present disclosure, the above composition and the above formed article can be used, for example, in the following applications.

Food packaging films, and members for liquid transfer for food production apparatuses, such as lining materials of fluid transfer lines, packings, sealing materials and sheets, used in food production processes;

chemical stoppers and packaging films for chemicals, and members for chemical solution transfer, such as lining materials of liquid transfer lines, packings, sealing materials and sheets, used in chemical production processes; inner surface lining materials of chemical solution tanks and piping of chemical plants and semiconductor factories; members for fuel transfer, such as O (square) rings, tubes, packings, valve stem materials, hoses and sealing materials, used in fuel systems and peripheral equipment of automobiles, and such as hoses and sealing materials, used in ATs of automobiles;

members used in engines and peripheral equipment of automobiles, such as flange gaskets of carburetors, shaft seals, valve stem seals, sealing materials and hoses, and other vehicular members such as brake hoses, hoses for air conditioners, hoses for radiators, and electric wire coating materials;

members for chemical transfer for semiconductor production apparatuses, such as O (square) rings, tubes, packings, valve stem materials, hoses, sealing materials, rolls, gaskets, diaphragms and joints;

members for coating and inks, such as coating rolls, hoses and tubes, for coating facilities, and containers for inks;

members for food and beverage transfer, such as tubes, hoses, belts, packings and joints for food and beverage, food packaging materials, and members for glass cooking appliances; members for waste liquid transport, such as tubes and hoses for waste transport;

members for high-temperature liquid transport, such as tubes and hoses for high-temperature liquid transport; members for steam piping, such as tubes and hoses for steam piping;

corrosion-proof tapes for piping, such as tapes to be wound on piping of decks and the like of ships;

various coating materials, such as electric wire coating materials, optical fiber coating materials, and transparent front side coating materials installed on the light incident side and back side lining materials of photoelectromotive elements of solar cells;

diaphragms and sliding members such as various types of packings of diaphragm pumps;

films for agriculture, and weathering covers for various kinds of roof materials, sidewalls and the like;

interior materials used in the building field, and coating materials for glasses such as non-flammable fireproof safety glasses; and

lining materials for laminate steel sheets used in the household electric field.

The fuel transfer members used in fuel systems of automobiles further include fuel hoses, filler hoses, and evap hoses. The above fuel transfer members can also be used as fuel transfer members for gasoline additive-containing fuels, resistant to sour gasoline, resistant to alcohols, and resistant to methyl tertiary butyl ether and amines and the like.

The above chemical stoppers and packaging films for chemicals have excellent chemical resistance to acids and the like. The above chemical solution transfer members also include corrosion-proof tapes to be wound on chemical plant pipes.

The formed article containing the copolymer of the present disclosure has excellent mold shape conformability, water vapor permeability, low oxygen permeability, creep resistance, and durability against tensile force applied at 120°C, and, therefore, can be particularly suitably used as a sheet for heat pressing, a protective film, a release film, an incubator component.

The above formed article also includes vehicular radiator tanks, chemical solution tanks, bellows, spacers, rollers and gasoline tanks, waste solution transport containers, high-temperature liquid transport containers and fishery and fish farming tanks.

The above formed article further includes members used for vehicular bumpers, door trims and instrument panels, food processing apparatuses, cooking devices, water- and oil-repellent glasses, illumination-related apparatuses, display boards and housings of OA devices, electrically illuminated billboards, displays, liquid crystal displays, cell phones, printed circuit boards, electric and electronic components, sundry goods, dust bins, bathtubs, unit baths, ventilating fans, illumination frames and the like.

The formed article containing the copolymer of the present disclosure can be suitably used as a member to be compressed such as a gasket or a packing. The member to be compressed of the present disclosure may be a gasket or a packing.

The size and shape of the members to be compressed of the present disclosure may suitably be set according to applications, and are not limited. The shape of the members to be compressed of the present disclosure may be, for example, annular. The members to be compressed of the present disclosure may also have, in plan view, a circular shape, an elliptical shape, a corner-rounded square or the like, and may be a shape having a through-hole in the central portion thereof.

The member to be compressed of the present disclosure is preferably used as a member that constitutes a non-aqueous electrolyte battery. The member to be compressed of the present disclosure is particularly suitable as a member that is used in a state of being in contact with a non-aqueous electrolyte in a non-aqueous electrolyte battery. That is, the member to be compressed of the present disclosure may have a surface that comes into contact with a non-aqueous electrolyte in a non-aqueous electrolyte battery.

The non-aqueous electrolyte batteries are not limited as long as being batteries having a non-aqueous electrolyte, and examples thereof include lithium ion secondary batteries and lithium ion capacitors. Members constituting the non-aqueous electrolyte batteries include sealing members and insulating members.

The non-aqueous electrolyte is not limited, and one or two or more of well-known solvents can be used such as propylene carbonate, ethylene carbonate, butylene carbonate, $\gamma$-butyllactone, 1,2-dimethoxyethane, 1,2-diethoxyethane, dimethyl carbonate, diethyl carbonate, and ethyl methyl carbonate. The non-aqueous electrolyte batteries may further have an electrolyte. The electrolyte is not limited, and may be $LiClO_4$, $LiAsF_6$, $LiPF_6$, $LiBF_4$, $LiCl$, $LiBr$, $CH_3SO_3Li$, $CF_3SO_3Li$, cesium carbonate, or the like.

The members to be compressed of the present disclosure can suitably be utilized, for example, as a sealing members such as sealing gaskets and sealing packings, and insulating members such as insulating gaskets or insulating packings. The sealing members are members to be used for preventing leakage of a liquid or a gas, or penetration of a liquid or a gas from outside. The insulating members are members to be used for insulating electricity. The members to be compressed of the present disclosure may also be members to be used for the purpose of both sealing and insulation.

The copolymer of the present disclosure can suitably be used as a material for forming an electric wire coating.

The coated electric wire has a core wire, and the coating layer installed on the periphery of the core wire and that containing the copolymer of the present disclosure. For example, an extrusion-formed article made by melt extruding the copolymer of the present disclosure on a core wire can be made into the coating layer. The coated electric wires are suitable to a high-frequency transmission cables, flat cables, heat-resistant cables and the like, and particularly to a high-frequency transmission cables.

As a material for core wire, for example, a metal conductor material such as copper or aluminum can be used. The core wire preferably one having a diameter of 0.02 to 3 mm. The diameter of the core wire is more preferably 0.04 mm or more, still more preferably 0.05 mm or more, and especially preferably 0.1 mm or more. The diameter of the core wire is more preferably 2 mm or less.

With regard to specific examples of the core wire, there may be used, for example, AWG (American Wire Gauge)-46 (solid copper wire of 40 $\mu$m in diameter), AWG-26 (solid copper wire of 404 $\mu$m in diameter), AWG-24 (solid copper wire of 510 $\mu$m in diameter), and AWG-22 (solid copper wire of 635 $\mu$m in diameter).

The coating layer is preferably one having a thickness of 0.1 to 3.0 mm. The thickness of the coating layer is also preferably 2.0 mm or less.

The high-frequency transmission cables include coaxial cables. The coaxial cables generally have a structure configured by laminating an inner conductor, an insulating coating layer, an outer conductor layer and a protective coating layer in order from the core part to the peripheral part. A formed article containing the copolymer of the present disclosure can suitably be utilized as the insulating coating layer containing the copolymer. The thickness of each layer in the above structure is not limited, but is usually: the diameter of the inner conductor is approximately 0.1 to 3 mm; the thickness of the insulating coating layer is approximately 0.3 to 3 mm; the thickness of the outer conductor layer is approximately 0.5 to 10 mm; and the thickness of the protective coating layer is approximately 0.5 to 2 mm.

Alternatively, the coating layer may one containing cells, and is preferably one in which cells are homogeneously distributed.

The average cell size of the cells is not limited, but is, for example, preferably 60 μm or smaller, more preferably 45 μm or smaller, still more preferably 35 μm or smaller, further still more preferably 30 μm or smaller, especially preferably 25 μm or smaller, and further especially preferably 23 μm or smaller. Then, the average cell size is preferably 0.1 μm or larger and more preferably 1 μm or larger. The average cell size can be determined by taking an electron microscopic image of an electric wire cross section, calculating the diameter of each cell by image processing, and averaging the diameters.

The foaming ratio of the coating layer may be 20% or higher, and is more preferably 30% or higher, still more preferably 33% or higher, and further still more preferably 35% or higher. The upper limit is not limited, and is, for example, 80%. The upper limit of the foaming ratio may be 60%. The foaming ratio is a value determined as ((the specific gravity of an electric wire coating material - the specific gravity of the coating layer)/the specific gravity of the electric wire coating material) × 100. The foaming ratio can suitably be regulated according to applications, for example, by regulation of the amount of a gas, described later, to be injected in an extruder, or by selection of the kind of a gas dissolving.

Alternatively, the coated electric wire may have another layer between the core wire and the coating layer, and may further have another layer (outer layer) on the periphery of the coating layer. In the case where the coating layer contains cells, the electric wire of the present disclosure may be of a two-layer structure (skin-foam) in which a non-foaming layer is inserted between the core wire and the coating layer, a two-layer structure (foam-skin) in which a non-foaming layer is coated as the outer layer, or a three-layer structure (skin-foam-skin) in which a non-foaming layer is coated as the outer layer of the skin-foam structure. The non-foaming layer is not limited, and may be a resin layer composed of a resin, such as a TFE/HFP-based copolymer, a TFE/PAVE copolymer, a TFE/ethylene-based copolymer, a vinylidene fluoride-based polymer, a polyolefin resin such as polyethylene [PE], or polyvinyl chloride [PVC].

The coated electric wire can be produced, for example, by using an extruder, heating the copolymer, extruding the copolymer in a melt state onto the core wire to thereby form the coating layer.

In formation of a coating layer, by heating the copolymer and introducing a gas in the copolymer in a melt state, the coating layer containing cells can be formed. As the gas, there can be used, for example, a gas such as chlorodifluoromethane, nitrogen or carbon dioxide, or a mixture thereof. The gas may be introduced as a pressurized gas into the heated copolymer, or may be generated by mingling a chemical foaming agent in the copolymer. The gas dissolves in the copolymer in a melt state.

Also, the copolymer of the present disclosure can suitably be utilized as a material for products for high-frequency signal transmission.

The products for high-frequency signal transmission are not limited as long as being products to be used for transmission of high-frequency signals, and include (1) formed boards such as insulating boards for high-frequency circuits, insulating materials for connection parts and printed wiring boards, (2) formed articles such as bases of high-frequency vacuum tubes and antenna covers, and (3) coated electric wires such as coaxial cables and LAN cables. The products for high-frequency signal transmission can suitably be used in devices utilizing microwaves, particularly microwaves of 3 to 30 GHz, in satellite communication devices, cell phone base stations, and the like.

In the products for high-frequency signal transmission, the copolymer of the present disclosure can suitably be used as an insulator in that the dielectric loss tangent is low.

As the (1) formed boards, printed wiring boards are preferable in that good electric property is provided. The printed wiring boards are not limited, but examples thereof include printed wiring boards of electronic circuits for cell phones, various computers, communication devices, and the like. As the (2) formed articles, antenna covers are preferable in that the low dielectric loss is low.

The formed article containing the copolymer of the present disclosure can be suitably utilized as a film or a sheet.

The film of the present disclosure is useful as a release film. The release film can be produced by forming the copolymer of the present disclosure by melt extrusion forming, calendering, press molding, casting, or the like. From the viewpoint that uniform thin films can be obtained, the release films can be produced by melt extrusion forming.

The film of the present disclosure can be applied to the surface of a roll that is used in OA devices. The copolymer of the present disclosure is formed into a required shape by extrusion forming, compression molding, press molding, or the like, such as a sheet, a film, or a tube, and can be used as a surface material of a roll, a belt, or the like of OA devices. In particular, a thin-wall tube and film can be produced by melt extrusion forming.

The formed article containing the copolymer of the present disclosure can be suitably used as a bottle, a tube, a joint, a valve, a piping member, and the like. These can be used to store or distribute a chemical solution.

So far, embodiments have been described above, but it is to be understood that various changes and modifications of patterns and details may be made without departing from the subject matter and the scope of the claims.

<1> According to the first aspect of the present disclosure, provided is:

a copolymer, comprising tetrafluoroethylene unit and perfluoro(ethyl vinyl ether) unit,
wherein the copolymer has a content of perfluoro(ethyl vinyl ether) unit of 4.5 to 6.2% by mass with respect to the whole of the monomer units,
a melt flow rate at 372°C of 0.8 to 4.0 g/10 min, and
the number of functional groups of 20 or less per $10^6$ main-chain carbon atoms.

<2> According to the second aspect of the present disclosure, provided is:
the copolymer according to the first aspect, wherein the copolymer has a content of perfluoro(ethyl vinyl ether) unit of 5.0 to 6.0% by mass with respect to the whole of the monomer units.
<3> According to the third aspect of the present disclosure, provided is:
the copolymer according to the first or second aspect, wherein the copolymer has a melt flow rate at 372°C of 1.0 to 3.0 g/10 min.
<4> According to the fourth aspect of the present disclosure, provided is:
an extrusion formed article, comprising the copolymer according to any one of the first to third aspects.
<5> According to the fifth aspect of the present disclosure, provided is a transfer molded article, comprising the copolymer according to any one of the first to third aspects.
<6> According to the sixth aspect of the present disclosure, provided is a formed article, comprising the copolymer according to any one of the first to third aspects, wherein the formed article is a sheet for heat pressing, a protective film, a release film, or an incubator component.

EXAMPLES

The embodiments of the present disclosure will be described by Examples as follows, but the present disclosure is not limited only to these Examples.
Each numerical value in Examples was measured by the following methods.

(Content of a monomer unit)

The content of each monomer unit was measured by an NMR analyzer (for example, manufactured by Bruker BioSpin GmbH, AVANCE 300, high-temperature probe).

(Melt flow rate (MFR))

The polymer was made to flow out from a nozzle of 2.1 mm in inner diameter and 8 mm in length at 372°C under a load of 5 kg by using a Melt Indexer G-01 (manufactured by Toyo Seiki Seisaku-sho, Ltd.) according to ASTM D1238, and the mass (g/10 min) of the polymer flowing out per 10 min was determined.

(Number of functional groups)

Pellets of the copolymer was formed by cold press into a film of 0.25 to 0.30 mm in thickness. The film was 40 times scanned and analyzed by a Fourier transform infrared spectrometer [FT-IR (Spectrum One, manufactured by PerkinElmer, Inc.)] to obtain an infrared absorption spectrum, and a difference spectrum against a base spectrum that was completely fluorinated and had no functional groups was obtained. From an absorption peak of a specific functional group observed on this difference spectrum, the number N of functional groups per $1 \times 10^6$ carbon atoms in a sample was calculated according to the following formula (A):

$$N = I \times K / t \quad \cdots \quad (A)$$

I: absorbance
K: correction factor
t: thickness of film (mm)

Regarding the functional groups in the present disclosure, for reference, the absorption frequency, the molar absorption coefficient, and the correction factor are shown in Table 2. The molar absorption coefficients are those determined from FT-IR measurement data of low molecular model compounds.

[Table 2]

**Table 2**

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{33}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

(Melting point)

The polymer was heated, as a first temperature raising step, at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corporation), and the melting point was determined from a melting curve peak observed in the second temperature raising step.

Comparative Example 1

1.752 L of pure water was charged in a 5.88 L-volume autoclave equipped with a stirrer, nitrogen replacement was sufficiently carried out; thereafter, 1.383 kg of perfluorocyclobutane, 118 g of perfluoro(ethyl vinyl ether) (PEVE), and 35 g of methanol were charged; the temperature in the system was held at 35°C. Then, tetrafluoroethylene (TFE) was introduced under pressure up to 0.64 MPa, and thereafter 0.5 g of a 50% methanol solution of di-n-propyl peroxydicarbonate was charged to initiate polymerization. Since the pressure in the system decreased along with the progress of the polymerization, TFE was continuously supplied to make pressure constant, and 1.0 g of PEVE was further added for every 15 g of TFE supplied. The polymerization was finished at the time when the amount of TFE additionally charged reached 553 g. Unreacted TFE was released to return the pressure in the autoclave to the atmospheric pressure, and thereafter, an obtained reaction product was washed with water and dried to obtain 591 g of a powder.

The obtained powder was melt extruded at 360°C with a 14φ screw extruder (manufactured by Imoto Machinery Co., Ltd.) to thereby obtain pellets of the copolymer. The PEVE content of the obtained pellets was measured by the method described above.

The obtained powder was put in a portable reactor (model TVS1, manufactured by Taiatsu Glass Kogyo), and heated to 210°C. After vacuumizing, F$_2$ gas diluted to 20% by volume with N$_2$ gas was introduced to the atmospheric pressure. 0.5 hour after the F$_2$ gas introduction, vacuumizing was once carried out and F$_2$ gas was again introduced. Further, 0.5 hour thereafter, vacuumizing was again carried out and F$_2$ gas was again introduced. Thereafter, while the above operation of F$_2$ gas introduction and vacuumizing was carried out once every 1 hour, and the reaction was carried out at a temperature of 210°C for 10 hours. After the reaction was finished, the reactor interior was replaced sufficiently by N$_2$ gas to finish the fluorination reaction, to thereby obtain pellets. The obtained pellets were used to measure various physical properties by the methods described above.

Comparative Example 2

Non-fluorinated pellets were obtained as in Comparative Example 1, except for changing the amount of PEVE to 105 g, changing the amount of methanol to 102 g, adding 0.9 g of PEVE for every 15 g of TFE supplied, to thereby obtain 588 g of a dry powder.

Comparative Example 3

51.8 L of pure water was charged in 174 L-volume autoclave equipped with stirrer, nitrogen replacement was sufficiently carried out; thereafter, 40.9 kg of perfluorocyclobutane, 2.75 kg of perfluoro(propyl vinyl ether) (PPVE) and 3.73 kg of methanol were charged; the temperature in the system was maintained at 35°C. Then, tetrafluoroethylene (TFE) was introduced under pressure up to 0.64 MPa, and thereafter 0.013 kg of a 50% methanol solution of di-n-propyl peroxydicarbonate was charged to initiate polymerization. Since the pressure in the system decreased along with the progress of the polymerization, TFE was continuously supplied to make the pressure constant, and 0.058 kg of PPVE was additionally charged for every 1 kg of TFE supplied. The polymerization was finished at the time when the amount of TFE additionally charged reached 40.9 kg. Unreacted TFE was released to return the pressure in the autoclave to the atmospheric pressure, and thereafter, an obtained reaction product was washed with water and dried to obtain 43.3 kg of a powder.

The obtained powder was melt extruded at 360°C with a screw extruder (trade name: PCM46, manufactured by Ikegai Corp) to thereby obtain pellets of a copolymer. The PPVE content of the obtained pellets was measured by the method described above.

The obtained pellets were put in a vacuum vibration-type reactor VVD-30 (manufactured by Okawara MFG. Co., Ltd.), and heated to 210°C. After vacuumizing, $F_2$ gas diluted to 20% by volume with $N_2$ gas was introduced to the atmospheric pressure. 0.5 hour after the $F_2$ gas introduction, vacuumizing was once carried out and $F_2$ gas was again introduced. Further, 0.5 hour thereafter, vacuumizing was again carried out and $F_2$ gas was again introduced. Thereafter, while the above operation of the $F_2$ gas introduction and vacuumizing was carried out once every 1 hour, and the reaction was carried out at a temperature of 210°C for 10 hours. After the reaction was finished, the reactor interior was replaced sufficiently by $N_2$ gas to finish the fluorination reaction. By using the fluorinated pellet, various physical properties were measured by the methods described above.

Comparative Example 4

Fluorinated pellets were obtained as in Comparative Example 1, except for changing the amount of PEVE to 37 g, changing the amount of methanol to 95 g, changing the amount of the 50% methanol solution of di-n-propyl peroxydicarbonate to 0.9 g, adding 0.4 g of PEVE for every 15 g of TFE supplied, to thereby obtain 568 g of a dry powder.

Comparative Example 5

Fluorinated pellets were obtained as in Comparative Example 1, except for changing the amount of PEVE to 77 g, changing the amount of methanol to 180 g, changing the amount of the 50% methanol solution of di-n-propyl peroxydicarbonate to 0.9 g, adding 0.7 g of PEVE for every 15 g of TFE supplied, to thereby obtain 580 g of a dry powder.

Comparative Example 6

A dry powder was obtained as in Comparative Example 1, except for changing the amount of PEVE to 97 g, adding no methanol, adding 0.9 g of PEVE for every 15 g of TFE supplied, to thereby obtain 585 g of a dry powder. By using the obtained powder, the PEVE content was measured by the method described above.

The obtained powder was put in a portable reactor (model TVS1, manufactured by Taiatsu Glass Kogyo), and heated to 210°C. After vacuumizing, F2 gas diluted to 20% by volume with N2 gas was introduced to the atmospheric pressure. 0.5 hour after the F2 gas introduction, vacuumizing was once carried out and F2 gas was again introduced. Further, 0.5 hour thereafter, vacuumizing was again carried out and F2 gas was again introduced. Thereafter, while the above operation of F2 gas introduction and vacuumizing was carried out once every 1 hour, and the reaction was carried out at a temperature of 210°C for 10 hours. After the reaction was finished, the reactor interior was replaced sufficiently by N2 gas to finish the fluorination reaction, to thereby obtain a powder.

Example 1

Fluorinated pellets were obtained as in Comparative Example 1, except for changing the amount of PEVE to 86 g, changing the amount of methanol to 19 g, adding 0.8 g of PEVE for every 15 g of TFE supplied, to thereby obtain 582 g of a dry powder.

Example 2

Fluorinated pellets were obtained as in Comparative Example 1, except for changing the amount of PEVE to 97 g, changing the amount of methanol to 67 g, adding 0.9 g of PEVE for every 15 g of TFE supplied, to thereby obtain 585 g of a dry powder.

Example 3

Fluorinated pellets were obtained as in Comparative Example 1, except for changing the amount of PEVE to 108 g, changing the amount of methanol to 85 g, adding 1.0 g of PEVE for every 15 g of TFE supplied, to thereby obtain 588 g of a dry powder.
By using the pellets or powder obtained in the Examples and the Comparative Examples, various physical properties were measured by the methods described above. The results are shown in Table 3.

[Table 3]

Table 3

| | PEVE content (% by mass) | MFR (g/10 min) | Number of functional groups (number/$C10^6$) | Melting point (°C) |
|---|---|---|---|---|
| Comparative Example 1 | 6.5 | 2.5 | <6 | 291 |
| Comparative Example 2 | 5.9 | 2.9 | 112 | 294 |
| Comparative Example 3 | 5.5(PPVE) | 2.0 | < 6 | 301 |
| Comparative Example 4 | 2.7 | 2.0 | < 6 | 307 |
| Comparative Example 5 | 4.6 | 10.9 | < 6 | 302 |
| Comparative Example 6 | 5.5 | 0.2 | < 6 | 298 |
| Example 1 | 5.0 | 1.0 | < 6 | 300 |
| Example 2 | 5.5 | 2.0 | < 6 | 298 |
| Example 3 | 6.0 | 3.0 | < 6 | 293 |

The description of "<6" in Table 3 means that the number of functional groups is less than 6.
Then, by using the obtained pellets or powder, the following properties were evaluated. The results are shown in Table 4.

(Rate of deflection at 90°C under load)

By using the pellets or powder and a heat press molding machine, a sheet-shape test piece of approximately 2.7 mm in thickness was prepared, and a test piece having $80 \times 10$ mm was cut out therefrom and heated in an electric furnace at 100°C for 20 hours. Except that the obtained test piece was used, a test was carried out according to the method described in JIS K-K 7191-1 with a heat distortion tester (manufactured by Yasuda Seiki Seisakusho, Ltd.) under conditions involving a test temperature of 30 to 150°C, a temperature-increasing rate of 120°C/hour, a bending stress of 1.8 MPa, and a flatwise method. The rate of deflection under load was determined by the following formula. A sheet, the rate of deflection at 90°C under load of which is large, has excellent mold shape conformability.

```
Rate of deflection under load (%) = a2 / a1 × 100
```

a1: thickness of test piece before test (mm)
a2: amount of deflection at 90°C (mm)

(Water vapor permeability)

By using the pellets or powder as well as a heat press molding machine, a sheet-shaped test piece of approximately 0.2 mm in thickness was prepared. 18 g of water was put in a test cup (permeation area: 12.56 cm$^2$), and the test cup was covered with the sheet-shape test piece, and fastened with a PTFE gasket being placed therebetween to hermetically close the test cup. The sheet-shape test piece was brought into contact with water, and held at a temperature of 95°C for 45 days, and thereafter, the test cup was taken out and allowed to stand at room temperature for 2 hours; thereafter, the amount of the mass lost was measured. The water vapor permeability (g·cm/m$^2$) was determined by the following formula.

Water vapor permeability (g·cm/m$^2$) = the amount of mass lost (g) $\times$ the thickness of sheet-shape test piece (cm) / the permeation area (m$^2$)

(Oxygen permeability coefficient)

By using the pellets or powder as well as a heat press molding machine, a sheet-shaped test piece of approximately 0.1 mm in thickness was prepared. Using the obtained test piece, oxygen permeability was measured with a differential pressure type gas permeation meter (L100-5000 gas permeability meter, manufactured by Systech Illinois) according to the method described in JIS K7126-1:2006. The oxygen permeability value at a permeation area of 50.24 cm$^2$ at a test temperature of 70°C at a test humidity of 0% RH was obtained. The obtained oxygen permeability and the test piece thickness were used to calculate the oxygen permeability coefficient from the following equation.

Oxygen permeability coefficient (cm$^3$·mm/(m$^2$·24 h,atm)) = GTR $\times$ d

    GTR: oxygen permeability (cm$^3$/(m$^2$·24 h·atm))
    d: test piece thickness (mm)

(Creep resistance evaluation)

The measurement of creep resistance was carried out according to the method described in ASTM D395 or JIS K6262:2013. By using the pellets or powder as well as a heat press molding machine, a formed article of 13 mm in outer diameter and 8 mm in height was prepared. The obtained formed article was cut to prepare a test piece of 13 mm in outer diameter and 6 mm in height. The prepared test piece was compressed to a compression deformation rate of 25% at normal temperature by using a compression device. The compressed test piece being fixed on the compression device was allowed to stand still in an electric furnace at 80°C for 72 hours. The compression device was taken out from the electric furnace, and cooled to room temperature; thereafter the test piece was dismounted. The collected test piece was allowed to stand at room temperature for 30 min, and the height of the collected test piece was measured and the recovery rate was determined by the following formula.

$$\text{Recovery rate } (\%) = (t_2 - t_1) / t_3 \times 100$$

    $t_1$: a height of spacer (mm)
    $t_2$: a height of test piece dismounted from compression device (mm)
    $t_3$: a height after compressive deformation (mm)

In the above test, $t_1$ was 4.5 mm, and $t_3$ was 1.5 mm.

(Tensile strength at 120°C)

The pellets and a heat press molding machine were used to obtain a test piece (compression-molded) having a thickness of about 2.0 mm. A dumbbell-shaped test piece was cut out from the above test piece using an ASTM Type V dumbbell, and the tensile strength of the obtained dumbbell-shaped test piece was measured at 120°C under a condition of 50 mm/min using an Autograph (AG-I 300kN manufactured by Shimadzu Corporation), according to ASTM D638.
A formed article having a high tensile strength at 120°C unlikely breaks even when tensile force is applied at high temperatures.

[Table 4]

**Table 4**

| | Rate of deflection at 90° C under load (%) | Water vapor permeability (g·cm/m$^2$) | Oxygen permeability coefficient cm$^3$·mm /(m$^2$-24h·atm) | Creep resistance evaluation Recovery rate (%) | Tensile strength at 120°C (MPa) |
|---|---|---|---|---|---|
| Comparative Example 1 | 99% | 32.0 | 1273 | 14% | 23.1 |
| Comparative Example 2 | 92% | 30.6 | 1274 | 14% | 22.1 |
| Comparative Example 3 | 76% | 25.9 | 1070 | 24% | 23.4 |
| Comparative Example 4 | 53% | 18.8 | 871 | 36% | 17.4 |
| Comparative Example 5 | 67% | 20.4 | 900 | 20% | 17.8 |
| Comparative Example 6 | >100% | 39.5 | 1420 | 24% | |
| Example 1 | 86% | 31.8 | 1198 | 23% | 23.3 |
| Example 2 | 88% | 31.5 | 1181 | 19% | 22.5 |
| Example 3 | 93% | 30.8 | 1197 | 17% | 22.1 |

**Claims**

1. A copolymer, comprising tetrafluoroethylene unit and perfluoro(ethyl vinyl ether) unit,

   wherein the copolymer has a content of perfluoro(ethyl vinyl ether) unit of 4.5 to 6.2% by mass with respect to the whole of the monomer units,
   a melt flow rate at 372°C of 0.8 to 4.0 g/10 min, and
   the number of functional groups of 20 or less per 10$^6$ main-chain carbon atoms.

2. The copolymer according to claim 1, wherein the copolymer has a content of perfluoro(ethyl vinyl ether) unit of 5.0 to 6.0% by mass with respect to the whole of the monomer units.

3. The copolymer according to claim 1 or 2, wherein the copolymer has a melt flow rate at 372°C of 1.0 to 3.0 g/10 min.

4. An extrusion formed article, comprising the copolymer according to any one of claims 1 to 3.

5. A transfer molded article, comprising the copolymer according to any one of claims 1 to 3.

6. A formed article, comprising the copolymer according to any one of claims 1 to 3, wherein the formed article is a sheet for heat pressing, a protective film, a release film, or an incubator component.

## INTERNATIONAL SEARCH REPORT

International application No.

**PCT/JP2023/013333**

### A.    CLASSIFICATION OF SUBJECT MATTER

***C08F 214/26***(2006.01)i; ***C08J 5/00***(2006.01)i

FI:    C08F214/26; C08J5/00 CEW

According to International Patent Classification (IPC) or to both national classification and IPC

### B.    FIELDS SEARCHED

Minimum documentation searched (classification system followed by classification symbols)

C08F214/26; C08J5/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| X | WO 2021/059753 A1 (DAIKIN INDUSTRIES, LTD.) 01 April 2021 (2021-04-01) paragraphs [0034], [0036], [0071], preparation example 1 | 1-6 |
| X | JP 2009-042478 A (DAIKIN INDUSTRIES, LTD.) 26 February 2009 (2009-02-26) claim 1, paragraphs [0009], [0026], [0036], example 1 | 1-4, 6 |
| A | | 5 |
| X | WO 2016/117492 A1 (DAIKIN INDUSTRIES, LTD.) 28 July 2016 (2016-07-28) paragraph [0118], reference examples 12-14 | 1-4 |
| A | | 5-6 |
| A | WO 2020/145133 A1 (DAIKIN INDUSTRIES, LTD.) 16 July 2020 (2020-07-16) entire text | 1-6 |
| A | WO 2014/007350 A1 (DAIKIN INDUSTRIES, LTD.) 09 January 2014 (2014-01-09) entire text | 1-6 |

☐ Further documents are listed in the continuation of Box C.        ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **26 May 2023** | **06 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

PCT/JP2023/013333

| Patent document cited in search report | | | Publication date (day/month/year) | Patent family member(s) | Publication date (day/month/year) |
|---|---|---|---|---|---|
| WO | 2021/059753 | A1 | 01 April 2021 | US 2022/0213996 A1 paragraphs [0038], [0040], [0081], preparation example 1<br>EP 4035872 A1<br>CN 114375378 A<br>KR 10-2022-0066935 A<br>TW 202128405 A | |
| JP | 2009-042478 | A | 26 February 2009 | (Family: none) | |
| WO | 2016/117492 | A1 | 28 July 2016 | US 2017/0260344 A1 paragraph [0158], reference examples 12-14<br>KR 10-2017-0086607 A | |
| WO | 2020/145133 | A1 | 16 July 2020 | US 2021/0345485 A1 entire text<br>EP 3909758 A1<br>CN 112585007 A<br>KR 10-2021-0041053 A<br>TW 202031779 A | |
| WO | 2014/007350 | A1 | 09 January 2014 | (Family: none) | |

Form PCT/ISA/210 (patent family annex) (January 2015)

**REFERENCES CITED IN THE DESCRIPTION**

**Patent documents cited in the description**

- WO 2021033539 A